(19) 

Europäisches
Patentamt
European
Patent Office
Office européen
des brevets

(11) **EP 4 156 559 A1**

(12) **EUROPEAN PATENT APPLICATION**
published in accordance with Art. 153(4) EPC

(43) Date of publication:
**29.03.2023 Bulletin 2023/13**

(21) Application number: **21808391.3**

(22) Date of filing: **19.05.2021**

(51) International Patent Classification (IPC):
*H04B 17/382* (2015.01)      *H04B 17/309* (2015.01)
*H04B 17/373* (2015.01)      *H04B 17/30* (2015.01)

(52) Cooperative Patent Classification (CPC):
**H04B 17/30; H04B 17/309; H04B 17/373;**
**H04B 17/382; H04W 72/04**

(86) International application number:
**PCT/CN2021/094591**

(87) International publication number:
**WO 2021/233331 (25.11.2021 Gazette 2021/47)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **19.05.2020 CN 202010427896**

(71) Applicant: **ZTE Corporation**
**Shenzhen, Guangdong 518057 (CN)**

(72) Inventors:
• JIN, Xiaojing
  **Shenzhen, Guangdong 518057 (CN)**
• CHENG, Qiong
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **COMMUNICATION CHANNEL OPTIMIZATION METHOD AND APPARATUS, ELECTRONIC DEVICE, AND STORAGE MEDIUM**

(57)     The present disclosure provides a communication channel optimization method, comprising: obtaining channel availability and channel usage information of some or all channels in a working frequency band within at least one period; determining a busy period of a service according to the channel usage information of the some or all channels obtained within the at least one period; and determining an optimal channel in a busy period according to the channel availability and the channel usage information of the some or all channels obtained within the busy period of the at least one period. The present disclosure also provides a communication channel optimization apparatus, an electronic device, and a computer readable storage medium.

FIG. 1

**Description**

This application claims priority from Chinese patent application No. 202010427896.7 filed on May 19, 2020, the entirety of which is incorporated hereby by reference.

TECHNICAL FIELD

The present disclosure relates to the field of communication technology, and particularly relates to a method and an apparatus for optimizing a communication channel, an electronic device, and a computer readable storage medium.

BACKGROUND

Since the Institute of Electrical and Electronics Engineers (IEEE) releases the wireless standard 801.11 in 1997, the wireless local area network (WLAN) has been widely accepted by the market and rapidly developed as the mainstream technology of home networks, intra-enterprise networks, and public access networks.
The WLAN, also known as WiFi, uses two frequency bands, including 2.4G and 5.8G, which are both unlicensed frequency bands that can be used without a license, as long as national regulations are complied. In short, a wireless router can be installed at home without any approval from any unit, and can be used without a license. That is, an air channel is to be shared with a neighbor, and thus is easy to be interfered.

SUMMARY

In a first aspect, an embodiment of the present disclosure provides a communication channel optimization method for optimizing a communication channel, including: acquiring channel availability and channel usage information of part or all channels in an operating frequency band within at least one cycle; determining, according to the channel usage information of the part or all channels acquired within the at least one cycle, a busy period of service; and determining, according to the channel availability and channel usage information of the part or all channels acquired within the busy period in the at least one cycle, an optimal channel of the busy period.
In a second aspect, an embodiment of the present disclosure further provides an electronic device, including: at least one processor; and a memory having at least one program stored thereon, the at least one program, when executed by the at least one processor, causes the at least one processor to perform method for optimizing the communication channel described above.
In a third aspect, an embodiment of the present disclosure further provides a computer readable storage medium storing a computer program thereon, the computer program, when executed by a processor, implements the method for optimizing the communication channel described above.
In a fourth aspect, an embodiment of the present disclosure further provides an apparatus for optimizing a communication channel, including: an acquisition module configured to acquire channel availability and channel usage information of part or all channels in an operating frequency band within at least one cycle; a dividing module configured to determine, according to the channel usage information of the part or all channels acquired within the at least one cycle, a busy period of service; and a determining module configured to determine, according to the channel availability and channel usage information of the part or all channels acquired within the busy period in the at least one cycle, an optimal channel of the busy period.

BRIEF DESCRIPTION OF DRAWINGS

FIG. 1 is a flowchart of a method for optimizing a communication channel according to an embodiment of the present disclosure;
FIG. 2 is a block diagram of an apparatus for optimizing a communication channel according to an embodiment of the present disclosure;
FIG. 3 is a block diagram of an apparatus for optimizing a communication channel in a first example of an embodiment of the present disclosure; and
FIG. 4 is a block diagram of an apparatus for optimizing a communication channel in a second example of an embodiment of the present disclosure.

DETAIL DESCRIPTION OF EMBODIMENTS

In order to make those skilled in the art better understand technical solutions of the present disclosure, the following describes the method and apparatus for optimizing the communication channel, the electronic device, and the computer readable storage medium according to the present disclosure in detail with reference to the accompanying drawings.

Example embodiments will be described more sufficiently below with reference to the accompanying drawings, but they may be embodied in different forms and should not be construed as limited to the embodiments set forth herein. These exemplary embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of at least one of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise/include" and/or "consist of ..." specify the presence of specific features, integers, steps, operations, elements, and/or components, but do not preclude the presence or addition of at least one another feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the related art and the present disclosure, and will not be interpreted in an idealized or overly formal sense unless expressly so defined herein.

In view of a problem of severe adjacent channel and co-channel interferences of WiFi, related technologies have been developed in the industry for optimizing a WiFi channel, such as a function for diagnosing a neighbor access point (AP), which enables an AP to discover related information of a neighbor AP and select a channel according to an occupancy of channel of the neighbor AP. However, since the diagnosing the neighbor AP affects WiFi services, each AP generally detects the neighbor AP at startup or during boot and then selects an optimal channel, which has an evident disadvantage since the optimal channel at startup or during boot will not be always optimal.

In view of above defects, there is further proposed a dynamic channel selection (DCS) in the industry, in which during operating, the AP detects the surrounding radio environment according to a predetermined rule, and then switches a channel according to a result of detecting. Specifically, there are two methods for detecting. In a first method, the AP may extract part of time slots for detecting a neighbor AP during normally using services. The first method has the defect that WiFi transmission performance of the AP is reduced since part of time slots are extracted for detecting the neighbor AP. In a second method, a dedicated antenna is used to detect the surrounding radio environment, and then the channel is to be switched according to the result of detecting. The second method has the defect that the dedicated antenna cannot be used for data transmission.

Both above methods aim to detect a current idlest channel in real time, and if the channel currently used is not the optimal channel and the service is idle, the channel is switched. Since the switching of channel will inevitably cause an interruption of network, the channel cannot be switched during the service being busy so as not to affect user service experiences. However, the optimal channel detected during the WiFi service being idle may be not optimal during the WiFi service being busy.

In conclusion, the above methods for optimizing a WiFi channel each have a relatively low precision.

Although based on problems existing in the methods for optimizing a WiFi channel, the method according to any embodiment of the present disclosure is also applicable to optimizing other communication channels.

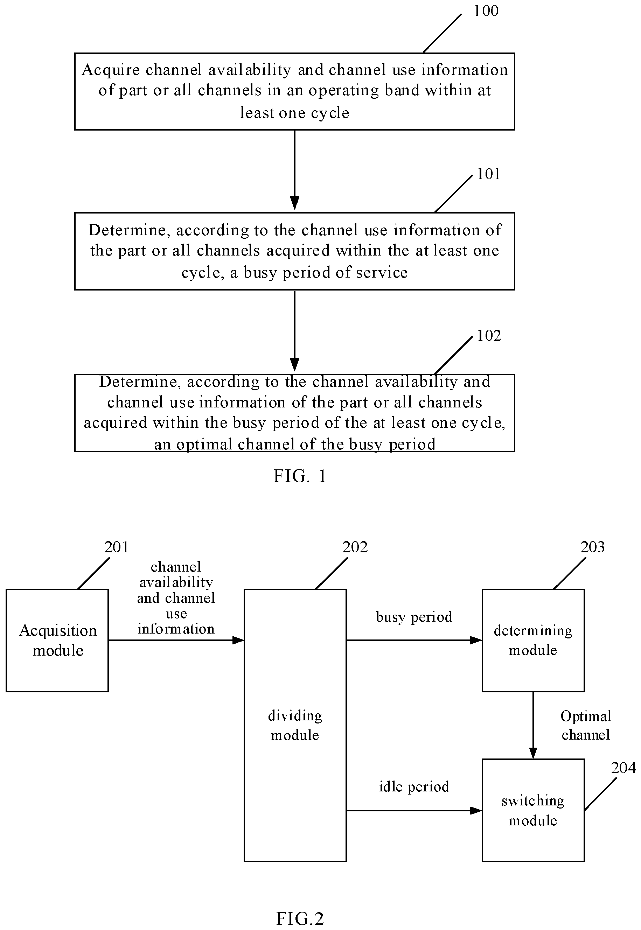

FIG. 1 is a flowchart of a method for optimizing a communication channel according to an embodiment of the present disclosure.

In a first aspect, referring to FIG. 1, an embodiment of the present disclosure provides a method for optimizing a communication channel, and the method includes following operations 100 to 102.

At operation 100, acquiring channel availability and channel usage information of part or all channels in an operating frequency band within at least one cycle.

At operation 101, determining, according to the channel usage information of the part or all channels acquired within the at least one cycle, a busy period of service.

At operation 102, determining, according to the channel availability and channel usage information of the part or all channels acquired within the busy period in the at least one cycle, an optimal channel of the busy period.

According to the method for optimizing the communication channel in the embodiment of the present disclosure, the busy period of service is firstly obtained from the channel usage information of part or all channels acquired within at least one cycle, that is, a historical usage regular pattern of a user on the channels is summarized, and then the optimal channel of the busy period is obtained from the channel availability and channel usage information of the part or all channels acquired within the busy period in the at least one cycle, that is, the optimal channel is obtained based on actual occupancy of channels by the user and the historical usage regular pattern of the user on the channels. Since the process for optimizing the channel is based on the actual occupancy of channels by the user during the busy period, the precision of optimizing the channel is improved.

In some implementations, after acquiring the channel availability and channel usage information of the part or all channels in the operating frequency band within at least one cycle, the method further includes:
determining, according to the channel usage information of the part or all channels acquired within the at least one cycle, an idle period of service, and switching, in the idle period, an operating channel to an optimal channel of a next busy period.

In some implementations, the operating channel is to be switched to the optimal channel of the next busy period at any time in the idle period.

In some implementations, in response to that an optimal channel of a previous busy period in the idle period is different from the optimal channel of the next busy period in the idle period, the operating channel is switched to the optimal channel of the next busy period in the idle period; and in response to that an optimal channel of a previous busy period in the idle period is the same as the optimal channel of the next busy period in the idle period, the operating channel is not switched in the idle period.

In some implementations, in response to that no device is attached to the AP, the operating channel is switched to the optimal channel of the next busy period in the idle period.

In some implementations, in response to that a sum number of bytes received and sent during a period of time within the idle period is less than a second preset threshold, the operating channel is switched to the optimal channel of the next busy period in the idle period.

According to the embodiment of the present disclosure, switching of the operating channel is performed merely in idle periods and not in busy periods, which ensures that each busy period is operated over the optimal channel without influencing normal services, thereby further improving an efficiency of optimizing the communication channel.

In some implementations, the channel may refer to a WiFi channel.

Certainly, the channel may refer to any other communication channel.

In some implementations, the channel may refer to any channel within the operating frequency band. For example, for the frequency band of 2.4G, there are eleven WiFi channels, and the channel in the embodiment of the present disclosure may include any one or more of the eleven WiFi channels.

In some implementations, the channel may refer to a critical channel within the operating frequency band, and the critical channel here refers to a channel without any adjacent channel interference within the operating frequency band. For example, for the frequency band of 2.4G, there are eleven WiFi channels, and the channels numbered 1, 6 and 11 are not mutually interfered. The usage of the critical channel for optimizing effectively reduces a probability of channel conflict as well as co-channel and adjacent channel interferences, and improves service transmission performance and user service experiences.

In some implementations, the channel usage information may include a flow rate.

In some implementations, the channel usage information may include a bandwidth utilization rate.

Certainly, the channel usage information may further include other information.

In some implementations, the channel availability is a difference between 1 and a channel utilization rate.

In some implementations, the channel utilization rate refers to a ratio that an air channel cannot be used by a current device due to noise interference or occupancy by other devices. That is, the channel utilization rate does not include an occupancy rate of the air channel by the current device.

In some implementations, the channel availability refers to channel availability of the channel in an operating state. In some implementations, instead of operating alone, each channel (i.e., primary operating channel) often operates in conjunction with at least one adjacent channel (i.e., secondary operating channel), for example, for the eleven WiFi channels of 2.4G, in general, during channel 1 being in the operating state, channel 2 and channel 3 are also in the operating state, with the channel 1 being the primary operating channel, and the channel 2 and the channel 3 being secondary operating channels; similarly, during channel 6 is in the operating state, channel 4, channel 5, and channel 7 are also in the operating state, with the channel 6 being the primary operating channel, and the channel 4, the channel 5, and the channel 7 being secondary operating channels; similarly, during channel 11 being in the operating state, channel 8, channel 9, and channel 10 (in some scenarios, further including channel 12 and channel 13) are also in the operating state, with the channel 11 being the primary operating channel, and the channel 8, the channel 9, and the channel 10 (in some scenarios, further including the channel 12 and the channel 13) being secondary operating channels, and therefore the channel availability may refer to a sum channel availability of the primary operating channel and the secondary operating channel(s).

In some implementations, the channel usage information may refer to channel usage information of the channel in the operating state. In some implementations, instead of operating alone, each channel (i.e., primary operating channel) often operates in conjunction with at least one adjacent channel (i.e., secondary operating channel), and therefore the channel usage information may refer to usage information of the primary operating channel and the secondary operating channel(s).

In some implementations, the channel usage information includes channel usage information corresponding to all service types. In some implementations, the channel usage information includes channel usage information corresponding to at least one service type. Implementations of above two cases will be respectively described below.

In a first case, the channel usage information includes channel usage information corresponding to all service types.

For the first case, the service type of data packets is not identified during acquiring the channel usage information.

For the first case, in some implementations, the acquiring channel availability and channel usage information of part or all channels in an operating frequency band within at least one cycle is implemented by: periodically collecting a channel utilization rate of the part or all channels and a sum number of bytes received and sent through the part or all channels within the operating frequency band in each cycle; and determining corresponding channel availability (i.e., corresponding to a collection for collecting the channel utilization rate) according to the channel utilization rate collected, and determining corresponding channel usage information (i.e., corresponding to a collection for collecting the sum number of bytes received and sent) according to the sum number of bytes received and sent collected.

In some implementations, the sum number of bytes received and sent may be referred to as traffic.

In some implementations, a collection time for collecting the channel utilization rate and the sum number of bytes received and sent is recorded.

In some implementations, the channel availability corresponding to an $i^{th}$ collection is equal to a difference between 1 and the channel utilization rate of the $i^{th}$ collection, where i is an integer greater than or equal to 1.

In some implementations, the channel usage information includes a flow rate, the flow rate $V_i$ corresponding

$$V_i = \frac{W_i - W_{i-1}}{T_i - T_{i-1}}$$

to the $i^{th}$ collection is , $W_i$ is a sum number of bytes received and sent collected in the $i^{th}$ collection, $W_{i-1}$ is a sum number of bytes received and sent collected in the $(i-1)^{th}$ collection, $T_i$ is the collection time corresponding to the $i^{th}$ collection, and $T_{i-1}$ is the collection time corresponding to the $(i-1)^{th}$ collection.

In some implementations, the channel usage information includes a bandwidth utilization rate, the bandwidth utilization rate corresponding to the $i^{th}$ collection is a ratio of the flow rate corresponding to the $i^{th}$ collection to a maximum bandwidth, and the maximum bandwidth may be any one of a maximum link bandwidth, a maximum physical bandwidth, a maximum actual bandwidth, or any other maximum bandwidth.

For the first case, in some implementations, determining, according to acquired channel usage information of part or all channels, the busy period of service and the idle period of service may be implemented by: calculating an average value of the channel usage information of the part or all channels corresponding to a same collection time in different cycles; determining, in response to that the average value of the channel usage information of the part or all channels corresponding to the collection time is greater than or equal to a first preset threshold value, that the collection time is in the busy period; and determining that a time period between any two adjacent collection times in the busy period is within the busy period; determining, in response to that the average value of the channel usage information of the part or all channels corresponding to the collection time is less than the first preset threshold value, that the collection time is in the idle period; and determining that a time period between any two adjacent collection times in the idle period is in the idle period; and determining that a time period between the collection time in the busy period and the collection time in the idle period, adjacent to the collection time in the busy period, is in the busy period, or in the idle period, or partially in the busy period and partially in the idle period.

For the first case, in some implementations, the determining, according to the channel availability and channel usage information of the part or all channels acquired within the busy period of the at least one cycle, an optimal channel of the busy period may be implemented by: calculating, according to the channel availability and channel usage information of the channels acquired within the busy period of the at least one cycle, an average value of the channel availability of each channel acquired within the busy period of at least one cycle; and determining the channel with a maximum average value of the channel availability as the optimal channel of the busy period.

In some implementations, the calculating, according to the channel availability and channel usage information of the channels acquired within the busy period of the at least one cycle, an average value of the channel availability of the channels acquired within the busy period of at least one cycle includes: taking the channel usage information as a weight to calculate a weighted average value of the channel availability of the channels acquired within the busy period of at least one cycle.

In some implementations, an average value $P_{kn}$ of the channel availability of the channel k acquired in an $n^{th}$

$$P_{kn} = \frac{\sum_m \sum_i \dfrac{B_{knmi} \times U_{knmi}}{Q_n}}{M}$$

busy period of at least one cycle is , where $B_{knmi}$ is the channel usage information of the channel k corresponding to the $i^{th}$ collection in the $n^{th}$ busy period of an $m^{th}$ cycle, $U_{knmi}$ is the channel availability of the channel k corresponding to the $i^{th}$ collection in the $n^{th}$ busy period of the $m^{th}$ cycle, $Q_n$ is the number of collections in the $n^{th}$ busy period, and M is the number of cycles.

In a second case, the channel usage information includes channel usage information corresponding to at least one service type.

For the second case, the service type of data packets is identified during acquiring the channel usage information.

For the second case, in some implementations, the acquiring channel availability and channel usage information of part or all channels in an operating frequency band within at least one cycle may be implemented by: periodically collecting a channel utilization rate of the part or all channels and a sum number of bytes received and sent corresponding to the service type within the operating frequency band in each cycle; determining corresponding channel availability (i.e., corresponding to a collection for collecting the channel utilization rate) according to the channel utilization rate collected; and determining, according to the sum number of bytes received and sent corresponding to the service type, corresponding channel usage information of the service type (i.e., corresponding to a collection for collecting the sum number of bytes received and sent).

In some implementations, the sum number of bytes received and sent may be referred to as traffic.

In some implementations, a collection time for collecting the channel utilization rate and the sum number of bytes received and sent is recorded.

In some implementations, the channel availability corresponding to an $i^{th}$ collection is equal to a difference between 1 and a channel utilization rate of the $i^{th}$ collection, where i is an integer greater than or equal to 1.

In some implementations, the channel usage information includes a flow rate, the flow rate $V_{ij}$ of an $j^{th}$ service

$$V_{ij} = \frac{W_{ij} - W_{(i-1)j}}{T_i - T_{i-1}}$$

type corresponding to the $i^{th}$ collection is , where $W_{ij}$ is a sum number of bytes received and sent of the $j^{th}$ service type collected in the $i^{th}$ collection, $W_{(i-1)j}$ is a sum number of bytes received and sent of the $j^{th}$ service type collected in the $(i-1)^{th}$ collection, $T_i$ is the collection time corresponding to the $i^{th}$ collection, and $T_{i-1}$ is the collection time corresponding to the $(i-1)^{th}$ collection.

In some implementations, the channel usage information includes a bandwidth utilization rate, the bandwidth utilization rate of an $j^{th}$ service type corresponding to the $i^{th}$ collection is equal to a ratio of the flow rate of the $j^{th}$ service type corresponding to the $i^{th}$ collection to a maximum bandwidth, the maximum bandwidth may be any one of a maximum link bandwidth, a maximum physical bandwidth, a maximum actual bandwidth, or any other maximum bandwidth.

For the second case, in some implementations, determining, according to the channel usage information of the part or all channels acquired within at least one cycle, the busy period of service and the idle period of service may be implemented by: calculating an average value of the channel usage information corresponding to all service types of the part or all channels corresponding to a same collection time in different cycles; determining, in response to that the average value of the channel usage information corresponding to all service types of the part or all channels corresponding to the collection time is greater than or equal to a first preset threshold value, that the collection time is in the busy period; and determining that a time period between any two adjacent collection times in the busy period is within the busy period; determining, in response to that the average value of the channel usage information corresponding to all service types of the part or all channels corresponding to the collection time is less than the first preset threshold value, that the collection time is in the idle period; and determining that a time period between any two adjacent collection times in the idle period is in the idle period; and determining that a time period between the collection time in the busy period and the collection time in the idle period adjacent to the collection time in the busy period is in the busy period, or in the idle period, or partially in the busy period and partially in the idle period.

In some implementations, during calculating the average value of the channel usage information corresponding to all service types of the part or all channels, a weighted average value of the channel usage information corresponding to all service types of each channel is calculated first, and then an average value of weighted average values of all the

$$\sum_k \sum_j A_j \times B_{kj}$$

channels is calculated. For example, , where $A_j$ is a weight for a $j^{th}$ service type, and $B_{kj}$ is the channel usage information of the $j^{th}$ service type of the channel k.

For the second case, in some implementations, the determining, according to the channel availability and channel usage information of the part or all channels acquired within the busy period of the at least one cycle, an optimal channel of the busy period may be implemented by: calculating, according to the channel availability and the channel usage information corresponding to all service types of the channels acquired within the busy period of the at least one cycle, an average value of the channel availability of each channel acquired within the busy periods of at least one cycle; and determining the channel with a maximum average value of the channel availability as the optimal channel of the busy period.

In some implementations, calculating, according to the channel availability and the channel usage information corresponding to all service types acquired within the busy period of the at least one cycle, the average value of the channel availability acquired within the busy period of at least one cycle includes: taking a weighted average value of the channel usage information corresponding to all service types as a weight to calculate a weighted average value of the channel availability acquired within the busy period of at least one cycle.

In some implementations, an average value $P_{kn}$ of the channel availability of the channel k acquired in an $n^{th}$ busy period of at least one cycle is

$$P_{kn} = \frac{\sum_m \sum_i \frac{\left(\sum_j A_j \times B_{knmij}\right) \times U_{knmi}}{Q_n}}{M}$$

, where $A_j$ is a weight of the $j^{th}$ service type, $B_{knmi}$ is the channel usage information of the $j^{th}$ service type of the channel k corresponding to the $i^{th}$ collection in the $n^{th}$ busy period of an $m^{th}$ cycle, $U_{knmi}$ is the channel availability of the channel k corresponding to the $i^{th}$ collection in the $n^{th}$ busy period of the $m^{th}$ cycle, $Q_n$ is the number of collections in the $n^{th}$ busy period, and M is the number of cycles.

In a second aspect, an embodiment of the present disclosure further provides an electronic device, including: at least one processor; and a memory storing at least one program thereon, the at least one program, when executed by the at least one processor, causes the at least one processor to implement the method for optimizing a communication channel (i.e., a WiFi channel) described above.

The processor is a device with a data processing capability, including but not limited to a central processing unit (CPU), or the like; and the memory is a device with a data storage capability, including but not limited to, a random access memory (RAM, more specifically SDRAM, DDR or the like), a read-only memory (ROM), an electrically erasable programmable read-only memory (EEPROM), or a flash.

In some implementations, the processor and the memory are connected to each other via a bus, and further connected to other components of a computing device.

In a third aspect, an embodiment of the present disclosure further provides a computer readable storage medium storing a computer program thereon, the computer program, when executed by a processor, causes the method for optimizing a communication channel (i.e., a WiFi channel) described above to be implemented.

FIG. 2 is a block diagram of an apparatus for optimizing a communication channel according to an embodiment of the present disclosure.

In a fourth aspect, referring to FIG. 2, an embodiment of the present disclosure provides an apparatus for optimizing a communication channel, which may be disposed in an access point (AP), or outside the AP as an independent device. The apparatus includes: an acquisition module 201 configured to acquire channel availability and channel usage information of part or all channels in an operating frequency band within at least one cycle; a dividing module 202 configured to determine, according to the channel usage information of the part or all channels acquired within the at least one cycle, a busy period of service; and a determining module 203 configured to determine, according to the channel availability and channel usage information of the part or all channels acquired within the busy period of the at least one cycle, an optimal channel of the busy period.

In some implementations, the dividing module 202 is further configured to: determine, according to the channel usage information of the part or all channels acquired within the at least one cycle, an idle period of service; and the apparatus further includes: a switching module 204 configured to switch an operating channel to an optimal channel of a next busy period in the idle period.

In some implementations, the switching module 204 is further configured to: switch the operating channel, in response to that an optimal channel of a previous busy period in the idle period is different from the optimal channel of the next busy period in the idle period, to the optimal channel of the next busy period in the idle period.

In some implementations, the channel usage information includes a flow rate, or a bandwidth utilization rate.

In some implementations, the channel is a critical channel.

In some implementations, the channel usage information includes channel usage information corresponding to at least one service type; and the acquisition module 201 is configured to: periodically collect a channel utilization rate and a sum number of bytes received and sent corresponding to the service type of the part or all channels within the operating frequency band in each cycle; determine corresponding channel availability (i.e., corresponding to a collection for collecting the channel utilization rate) according to the channel utilization rate collected; and determine, according to the sum number of bytes received and sent corresponding to the service type, corresponding channel usage information of the service type (i.e., corresponding to a collection for collecting the sum number of bytes received and sent corresponding to the service type).

In some implementations, the acquisition module 201 is configured to: periodically collect a channel utilization rate and a sum number of bytes received and sent of part or all channels within the operating frequency band in each cycle; and determine corresponding channel availability (i.e., corresponding to a collection for collecting the channel utilization rate) according to the channel utilization rate collected, and determine corresponding channel usage information (i.e., corresponding to a collection for collecting the sum number of bytes received and sent) according to the sum number of bytes received and sent collected.

In some implementations, the dividing module 202 is configured to: calculate an average value of the channel usage information of the part or all channels corresponding to a same collection time in different cycles; determine, in response to that the average value of the channel usage information of the part or all channels corresponding to the collection time is greater than or equal to a first preset threshold value, that the collection time is in the busy period; and determine that a time period between any two adjacent collection times in the busy period is within the busy period;

In some implementations, the determining module 203 is configured to: calculate, according to the channel availability and channel usage information of the channels acquired within the busy period of the at least one cycle, an average value of the channel availability of each channel acquired within the busy periods of at least one cycle; and determine the channel with a maximum average value of the channel availability as the optimal channel of the busy period.

In some implementations, the determining module 203 is configured to calculate, according to the channel availability and channel usage information of the channels acquired within the busy period of the at least one cycle, the average value of the channel availability of each channel acquired within the busy periods of at least one cycle by: taking the channel usage information as a weight to calculate a weighted average value of the channel availability of each channel acquired within the busy period of at least one cycle.

A process for implementing the apparatus for optimizing a communication channel described above is the same as that for implementing the method for optimizing a communication channel in the foregoing embodiment, and thus is not described in detail here again.

Examples are listed below to describe in detail an implementation of the method for optimizing a communication channel according to the embodiment of the present disclosure, and the examples are merely for convenience of description, rather than limit the scope of the present disclosure.

**First Example**

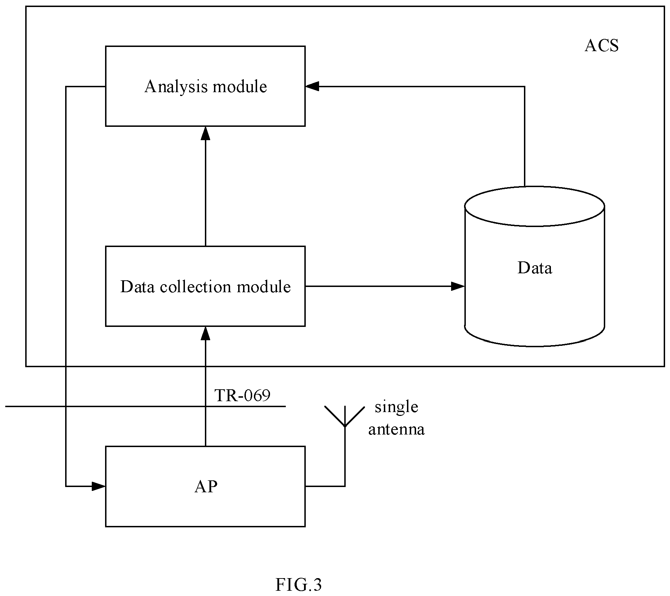

As shown in FIG. 3, a wireless module of the AP has a single antenna, and due to a limitation of hardware capability, can monitor merely a channel utilization rate of a WiFi channel used by itself. In this case, channel utilization rates of different channels are acquired by periodically switching the channel used.

A data collection module and an analysis module may be implemented by a management device of the AP, such as an auto configuration server (ACS), and the data collection module performs data collection and configuration modification on the AP through a TR-069 protocol.

Relevant parameters are configured as follows: 1, a data analysis cycle (i.e., the cycle described above) is a natural day (24 hours); 2, a list of critical channels includes channels C1, C2, ..., Cn; 3, a data collection cycle (not given in the above description) is a duration of about 60 seconds; and 4, a monitoring cycle (i.e., a cycle for optimizing the channel, which is not given in the above description) is a duration of 7 days.

The process for optimizing the WiFi channel is described below.

1. Data acquisition: the data collection module performs parameter configuration and data collection through a TR-069 protocol by following (1) to (3).

(1) A channel of the AP is set to $C_k$ (k=1).

(2) A channel utilization rate and a sum number of bytes received and sent of the AP are acquired once per minute, and the collection time $T_i$ (where i is a collection sequence number for collecting the channel) is recorded;

a WiFi flow rate of the $i^{th}$ collection of the channel k is calculated according to an equation

$$V_{ki} = \frac{W_{ki} - W_{k(i-1)}}{T_i - T_{i-1}}$$

, where $W_{ki}$ is a sum number of bytes received and sent of the channel k collected in the $i^{th}$ collection, $W_{k(i-1)}$ is a sum number of bytes received and sent of the channel k collected in the $(i-1)^{th}$ collection, $T_i$ is the collection time of the $i^{th}$ collection, and $T_{i-1}$ is the collection time of the $(i-1)^{th}$ collection; the channel availability $U_{ki}$ of the channel k collected the $i^{th}$ collection is a difference between 1 and the channel utilization rate of the channel k of the $i^{th}$ collection.

(3) The channel is set as a next critical channel $C_{k+1}$ after collections of 7 days, and (2) is repeated, until all N critical channels are collected.

Through the above collections, data of 7 days (WiFi flow rates and channel availability) of the N critical channels are finally obtained.

Data samples collected in the 2.4G frequency band are shown in table 1.

Table 1

| Collectio n sequence number | Channel number | Date of collectio n | Time of collectio n | WiFi flow rate (kbps) | Channel availability | Descriptio n |
|---|---|---|---|---|---|---|
| 1 | 1 | Jan. 1, 2020 | 00: 00: 00 | 1000 | 80% | Jan. 1, 2020 is a first collection day of channel 1 (the sequence number of the collection day is 1) |
| 2 | 1 | Jan. 1, 2020 | 00: 01: 00 | 100 | 70% | |
| ...... | ...... | | ...... | ...... | ...... | |
| 1440 | 1 | Jan. 1, 2020 | 00: 00: 00 | 100 | 70% | Jan. 2, 2020 is a second collection day of channel 1 (the sequence number of the collection day is 2) |
| ...... | ...... | | ...... | ...... | ...... | |
| 10079 | 1 | Jan. 7, 2020 | 11: 59: 00 | 100 | 70% | Jan. 7, 2020 is a seventh collection day of channel 1 (the sequence number of the collection day is 7) |
| 10080 | 6 | Jan. 8, 2020 | 00: 00: 00 | 1000 | 80% | Jan. 8, 2020 is a first collection day of channel 6 (the sequence number of the collection day is 1) |
| 10081 | 6 | Jan. 8, 2020 | 00: 01: 00 | 1000 0 | 70% | |
| ...... | ...... | | ...... | ...... | ...... | |
| 20160 | 11 | Jan.15, 2020 | 00: 00: 00 | 1000 | 80% | Jan. 8, 2020 is a first collection day of channel 11 (the sequence number of the collection day is 1) |
| 20161 | 11 | Jan. 15, 2020 | 00: 01: 00 | 1000 0 | 70% | |
| ...... | ...... | | ...... | ...... | ...... | |

2. Data analysis is performed as following (1) and (2) by the analysis module.

(1) Habits of a user using the WiFi are analyzed; WiFi flow rates obtained in 7xN days are aligned according to the collection time; an average value of the WiFi flow rates at a same collection time is calculated to obtain changes of an average WiFi flow rate within each day; for the collection time, in response to that the average WiFi flow rate of the collection time is greater than or equal to a first preset threshold, the collection time is determined in the busy period, and a time period between any two adjacent collection times in the busy period is determined in the busy period; for the collection time, in response to that the average WiFi flow rate of the collection time is less than the first preset threshold, the collection time is determined in the idle period, and a time period between any two adjacent collection times in the idle period is determined in the idle period; a time period between the collection time in the busy period and the collection time in the idle period, adjacent to the collection time in the busy period, is determined in the busy period; and based on above analysis, 24 hours each day are divided into a plurality of time periods, with each time period being the busy period or the idle period.

(2) An optimal channel of each busy period is analyzed; data of the channel k, including a collection time, a WiFi flow rate and channel availability, is acquired, and each piece of data is classified into busy periods or idle periods according to the collection time; a weighted average value $P_{kmn}$ of the channel availability of the channel k acquired in an $n^{th}$ busy

$$P_{kmn} = \sum_i \frac{V_{knmi} \times U_{knmi}}{Q_n}$$

period of the $m^{th}$ day is calculated as , where $V_{knmi}$ is a WiFi flow rate of the channel k corresponding to the $i^{th}$ collection in the $n^{th}$ busy period of an $m^{th}$ cycle, $U_{knmi}$ is the channel availability of the channel k corresponding to the $i^{th}$ collection in the $n^{th}$ busy period of the $m^{th}$ cycle, and Qn is the number of collections in the $n^{th}$ busy period, which may be a difference between a maximum collection sequence number and a minimum collection sequence number of the channel k in the $n^{th}$ busy period of the $m^{th}$ cycle; an average value $P_{kn}$ of weighted average values of the channel availability of the channel k acquired in the $n^{th}$ busy periods of the 7 days is calculated as $P_{kn} = P_{kmn} / M$, where M is a monitoring cycle, that is, a duration of 7 days; by comparing average channel availability $P_{kn}$ of the N critical channels in a same busy period, and the critical channel with a highest $P_{kn}$ is taken as the optimal channel of the busy period; and above operations are repeated to obtain the optimal channel of each busy period, that is, a table of optimal channels of the busy periods is obtained. For example, a table of optimal channels in the 2.4G frequency band is shown in table 2.

Table 2

| Start time | End time | Number of optimal channel |
|---|---|---|
| 6: 00: 00 | 7: 00: 00 | 1 |
| 7: 30: 00 | 8: 00: 00 | 1 |
| 11: 00: 00 | 13: 00: 00 | 6 |
| 18: 00: 00 | 23: 38: 00 | 11 |

If any two adjacent busy periods have a same optimal channel, the two busy periods and the idle period between the two busy periods are merged into a longer busy period. For example, above table of optimal channels of the busy periods in the 2.4G frequency band is merged into that shown in table 3.

Table 3

| Start time | End time | Number of optimal channel |
|---|---|---|
| 6: 00: 00 | 8: 00: 00 | 1 |
| 11: 00: 00 | 13: 00: 00 | 6 |
| 18: 00: 00 | 23: 38: 00 | 11 |

3. Channel switching: an operating channel of the AP is set according to the optimal channel obtained above, and a strategy to be periodically executed is generated. For example, the current time is 5 o'clock and in the idle period, the current channel is 11, and the optimal channel of the next busy period (from 6: 00 to 8: 00) is 1, and thus the operating channel is switched to channel 1.

**Second Example**

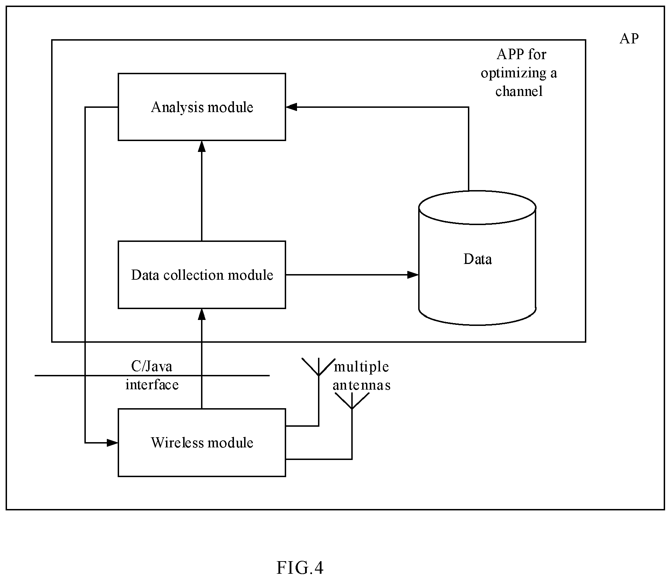

As shown in FIG. 4, a wireless module of the AP has multiple antennas, and supports detecting a channel utilization rate of any channel not used by the current AP through any antenna.

A data collection module and an analysis module are implemented by a software module of the AP, and data collection and configuration modification on the wireless module of the AP are carried out through a C or Java Application Programming Interface (API).

Relevant parameters are configured as follows: 1, a data analysis cycle is a natural day (24 hours); 2, a list of critical channels includes channels C1, C2, ..., Cn; 3, a data collection cycle is a duration of about 60 seconds; and 4, a monitoring cycle is a duration of 7 days.

The process for optimizing the WiFi channel is described below.

1. Data collection is performed by following (1) to (3).

(1) One or more antennas are set to be dedicatedly configured to monitor a channel utilization rate of a channel not used by the AP.

(2) Channel utilization rates and a sum number of bytes received and sent of all monitored channels of the AP are collected once per minute, and the collection time $T_i$ (where i is a collection sequence number for collecting the channel) is recorded; a WiFi flow rate of the channel k of the $i^{th}$ collection is calculated according to an equation

$$V_{ki} = \frac{W_{ki} - W_{k(i-1)}}{T_i - T_{i-1}}$$

, where $W_{ki}$ is a sum number of bytes received and sent of the channel k collected in the $i^{th}$ collection, $W_{k(i-1)}$ is a sum number of bytes received and sent of the channel k collected in the $(i-1)^{th}$ collection, $T_i$ is the collection time of the $i^{th}$ collection, and $T_{i-1}$ is the collection time of the $(i-1)^{th}$ collection; the channel availability $U_{ki}$ of the channel k collected in the $i^{th}$ collection is a difference between 1 and the channel utilization rate of the channel k of the $i^{th}$ collection.

3) After acquisitions of 7 days, data (WiFi flow rates and channel availability) of the N critical channels in the 7 days are obtained.

Data samples collected in the 2.4G frequency band are shown in table 4.

Table 4

| Collection sequence number | Date of collection | Time of collection | Channel 1 | | Channel 6 | | Channel 11 | |
|---|---|---|---|---|---|---|---|---|
| | | | WiFi flow rate (kbps) | Channel availability | WiFi flow rate (kbps) | Channel availability | WiFi flow rate (kbps) | Channel availability |
| 1 | Jan. 1, 2020 | 00:00:00 | 1000 | 80% | 1000 | 60% | 1000 | 30% |
| 2 | Jan. 1, 2020 | 00:00:01 | 300 | 70% | 300 | 30% | 300 | 60% |
| ... | ... | ... | ... | ... | ... | ... | ... | ... |

2. Data analysis is performed as following (1) and (2) by the analysis module.

(1) Habits of a user using the WiFi are analyzed; WiFi flow rates obtained in the 7×N days are aligned according to the collection time; an average value of the WiFi flow rates at a same collection time is calculated to obtain changes of an average WiFi flow rate within each day; for the collection time, in response to that the average WiFi flow rate of the collection time is greater than or equal to a first preset threshold, the collection time is determined in the busy period, and a time period between any two adjacent collection times in the busy period is determined in the busy period; for the collection time, in response to that the average WiFi flow rate of the collection time is less than the first preset threshold, the collection time is determined in the idle period, and a time period between any two adjacent collection times in the idle period is determined in the idle period; a time period between the collection time in the busy period and the collection time in the idle period, adjacent to the collection time in the busy period, is determined in the busy period; and based on above analysis, 24 hours each day are divided into a plurality of time periods, with each time period being the busy period or the idle period.

(2) An optimal channel of each busy period is analyzed; data of the channel k, including a collection time, a WiFi flow rate and channel availability, is acquired, and each piece of data is classified into busy periods or idle periods according to the collection time; a weighted average value $P_{kmn}$ of the channel availability of the channel k acquired in an $n^{th}$ busy

$$P_{kmn} = \sum_{i} \frac{V_{knmi} \times U_{knmi}}{Q_n}$$

period of the $m^{th}$ day is calculated as , where $V_{knmi}$ is a WiFi flow rate of the channel k corresponding to the $i^{th}$ collection in the $n^{th}$ busy period of the $m^{th}$ day, $U_{knmi}$ is the channel availability of the channel k corresponding to the $i^{th}$ collection in the $n^{th}$ busy period of the $m^{th}$ day, $Q_n$ is the number of collections in the $n^{th}$ busy period, which may be a difference between a maximum collection sequence number and a minimum collection sequence number in the $n^{th}$ busy period; an average value $P_{kn}$ of weighted average values of the channel availability of the channel k acquired in the $n^{th}$ busy periods of the 7 days is calculated as $P_{kn} = P_{kmn} / M$, where M is a monitoring cycle, that is, a duration of 7 days; by comparing average channel availability $P_{kn}$ of the N critical channels in a same busy period, the critical channel with a highest $P_{kn}$ is taken as the optimal channel of the busy period; and above operations are repeated to obtain the optimal channel of each busy period, that is, a table of optimal channels of the busy periods is obtained. For example, a table of optimal channels in the 2.4G frequency band is shown in table 5.

Table 5

| Start time | End time | Number of optimal channel |
|---|---|---|
| 6: 00: 00 | 8: 00: 00 | 1 |
| 11: 00: 00 | 13: 00: 00 | 6 |
| 18: 00: 00 | 23: 38: 00 | 11 |

3. Channel switching: an operating channel of the AP is set according to the optimal channel obtained, and a strategy to be periodically executed is generated. For example, the current time is 5 o'clock and in the idle period, the current channel is 11, and the optimal channel of the next busy period (from 6: 00 to 8: 00) is 1, in response to that no device is attached to the AP, or the sum number of bytes received and sent is less than a second preset threshold, the operating channel is switched to channel 1.

Those of ordinary skill in the art will appreciate that all or some operations of the method described above, functional modules/units in the device and apparatus may be implemented as software, firmware, hardware, and suitable combinations thereof. In a hardware implementation, a division between the functional modules/units mentioned in the above description does not necessarily correspond to a division of physical components; for example, one physical component may have multiple functions, or one function or operation may be performed cooperatively by several physical components. Part or all physical components may be implemented as software executed by a processor, such as a CPU, a digital signal processor or microprocessor, or implemented as hardware, or implemented as an integrated circuit, such as an application specific integrated circuit. Such software may be distributed on a computer readable medium which may include a computer storage medium (or non-transitory medium) and communication medium (or transitory medium). The computer storage medium includes volatile and nonvolatile, removable and non-removable media implemented in any method or technology for storing information such as computer readable instructions, data structures, program modules or other data, as is well known to those of ordinary skill in the art. The computer storage medium includes, but is not limited to, RAM, ROM, EEPROM, flash memory or other memory, CD-ROM, digital versatile disc (DVD) or other optical disc, magnetic cartridge, magnetic tape, magnetic disk or other magnetic storage devices, or may be any other medium used for storing desired information and accessible by a computer. Moreover, it is well known to those ordinary skilled in the art that the communication medium typically includes a computer readable instruction, a data structure, a program module, or other data in a modulated data signal, such as a carrier wave or other transport mechanism, and may include any information delivery medium.

The present disclosure has disclosed example embodiments, and although specific terms are employed, they are used and should be interpreted merely in a generic and descriptive sense, not for purposes of limitation. In some instances, features, characteristics and/or elements described in connection with a particular embodiment may be used alone, or may be used in combination with features, characteristics and/or elements described in connection with other embodiments, unless expressly stated otherwise, as would be apparent to one skilled in the art. It will, therefore, be understood by those skilled in the art that various changes in form and details may be made without departing from the scope of the present disclosure as set forth in the appended claims.

**Claims**

1.  A method for optimizing a communication channel, comprising:

    acquiring channel availability and channel usage information of part or all channels in an operating frequency band within at least one cycle;
    determining, according to the channel usage information of the part or all channels acquired within the at least one cycle, a busy period of service; and
    determining, according to the channel availability and channel usage information of the part or all channels acquired within the busy period of the at least one cycle, an optimal channel of the busy period.

2.  The method according to claim 1, further comprising:

    after acquiring the channel availability and channel usage information of the part or all channels in the operating frequency band within at least one cycle, determining, according to the channel usage information of the part or all channels acquired within the at least one cycle, an idle period of service; and
    switching an operating channel to an optimal channel of a next busy period in the idle period.

3.  The method according to claim 2, wherein in response to that an optimal channel of a previous busy period in the idle period is different from the optimal channel of the next busy period in the idle period, the operating channel is switched to the optimal channel of the next busy period in the idle period.

4.  The method according to any of claims 1 to 3, wherein the channel usage information comprises a flow rate or a bandwidth utilization rate.

5.  The method according to any of claims 1 to 3, wherein the channel is a critical channel.

6.  The method according to any of claims 1 to 3, wherein the channel usage information comprises channel usage information corresponding to at least one service type; and
    the acquiring channel availability and channel usage information of part or all channels in an operating frequency band within at least one cycle comprises:

    periodically collecting a channel utilization rate and a sum number of bytes received and sent corresponding to the service type of the part or all channels within the operating frequency band in each cycle;
    determining corresponding channel availability according to the channel utilization rate collected; and
    determining, according to the sum number of bytes received and sent corresponding to the service type, corresponding channel usage information of the service type.

7.  The method according to any of claims 1 to 3, wherein the acquiring channel availability and channel usage information of part or all channels in an operating frequency band within at least one cycle comprises:

    periodically collecting a channel utilization rate and a sum number of bytes received and sent of the part or all channels within the operating frequency band in each cycle; and
    determining channel availability corresponding to a collection for collecting the channel utilization rate according to the channel utilization rate collected, and determining channel usage information corresponding to a collection for collecting the sum number of bytes received and sent according to the sum number of bytes received and sent collected.

8.  The method according to claim 7, wherein the determining, according to the channel usage information of the part or all channels acquired within the at least one cycle, a busy period of service comprises:

    calculating an average value of the channel usage information of the part or all channels corresponding to a same collection time in different cycles;
    determining, in response to that the average value of the channel usage information of the part or all channels corresponding to the collection time is greater than or equal to a first preset threshold value, that the collection time is in the busy period; and
    determining that a time period between any two adjacent collection times in the busy period is within the busy period.

9. The method according to any of claims 1 to 3, wherein the determining, according to the channel availability and channel usage information of the part or all channels acquired within the busy period of the at least one cycle, an optimal channel of the busy period comprises:

calculating, according to the channel availability and channel usage information of the channels acquired within the busy period of the at least one cycle, an average value of the channel availability of each channel acquired within the busy periods of at least one cycle; and
determining the channel with a maximum average value of the channel availability as the optimal channel of the busy period.

10. The method according to claim 9, wherein the calculating, according to the channel availability and channel usage information of the channels acquired within the busy period of the at least one cycle, an average value of the channel availability of each channel acquired within the busy periods of at least one cycle comprises:
taking the channel usage information as a weight to calculate a weighted average value of the channel availability of each channel acquired within the busy period of at least one cycle.

11. An electronic device, comprising:

at least one processor; and
a storage component storing at least one program thereon, the at least one program, when executed by the at least one processor, causes the at least one processor to implement the method according to any one of claims 1 to 10.

12. A computer readable storage medium storing a computer program thereon, the computer program, when executed by a processor, causes the method according to any one of claims 1 to 10 to be implemented.

13. An apparatus for optimizing a communication channel, comprising:

an acquisition module configured to acquire channel availability and channel usage information of part or all channels in an operating frequency band within at least one cycle;
a dividing module configured to determine, according to the channel usage information of the part or all channels acquired within the at least one cycle, a busy period of service; and
a determining module configured to determine, according to the channel availability and channel usage information of the part or all channels acquired within the busy period of the at least one cycle, an optimal channel of the busy period.

14. The apparatus according to claim 13, wherein the dividing module is further configured to:

determine, according to the channel usage information of the part or all channels acquired within the at least one cycle, an idle period of service; and
the apparatus further comprises:
a switching module configured to switch an operating channel to an optimal channel of a next busy period in the idle period.

15. The apparatus according to claim 13 or 14, wherein the channel usage information comprises a flow rate or a bandwidth utilization rate.

/ 100

Acquire channel availability and channel use information
of part or all channels in an operating band within at
least one cycle

/ 101

Determine, according to the channel use information of
the part or all channels acquired within the at least one
cycle, a busy period of service

/ 102

Determine, according to the channel availability and
channel use information of the part or all channels
acquired within the busy period of the at least one cycle,
an optimal channel of the busy period

FIG. 1

201

Acquisition
module

channel
availability
and channel
use
information

202

dividing
module

busy period

203

determining
module

Optimal
channel

idle period

switching
module

204

FIG.2

FIG.3

FIG.4

## INTERNATIONAL SEARCH REPORT

| International application No. |
| --- |
| **PCT/CN2021/094591** |

**A. CLASSIFICATION OF SUBJECT MATTER**

H04B 17/382(2015.01)i; H04B 17/309(2015.01)i; H04B 17/373(2015.01)i; H04B 17/30(2015.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; VEN; CNKI; USTXT; WOTXT; EPTXT: 中兴, 多, 信道, 优化, 切换, 接入, 使用, 占用, 可用, 周期, 时间段, 时段, 忙, 最优, 最佳, 最好, ZTE, multi+, channel, optimization, access, handover, switch, occupancy, available, use, period, duration, busy, best, optimal

**C. DOCUMENTS CONSIDERED TO BE RELEVANT**

| Category* | Citation of document, with indication, where appropriate, of the relevant passages | Relevant to claim No. |
| --- | --- | --- |
| A | CN 105933260 A (CHINA UNITED NETWORK COMMUNICATIONS GROUP CO., LTD.) 07 September 2016 (2016-09-07) description, paragraphs [0002]-[0074], figures 1, 2 | 1-15 |
| A | CN 104853380 A (SOUTHWEST JIAOTONG UNIVERSITY) 19 August 2015 (2015-08-19) description, paragraphs [0002]-[0049], and figures 1-4 | 1-15 |
| A | CN 105432118 A (QUALCOMM INC.) 23 March 2016 (2016-03-23) entire document | 1-15 |
| A | CN 108200615 A (SENGLED WISDOM TECHNOLOGY CO., LTD.) 22 June 2018 (2018-06-22) entire document | 1-15 |
| A | US 2012108276 A1 (LANG KE et al.) 03 May 2012 (2012-05-03) entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 July 2021** | **29 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2021/094591** |

| Patent document cited in search report | | | Publication date (day/month/year) | Patent family member(s) | | | Publication date (day/month/year) |
| --- | --- | --- | --- | --- | --- | --- | --- |
| CN | 105933260 | A | 07 September 2016 | None | | | |
| CN | 104853380 | A | 19 August 2015 | CN | 104853380 | B | 22 May 2018 |
| CN | 105432118 | A | 23 March 2016 | WO | 2015017161 | A1 | 05 February 2015 |
| | | | | EP | 3028503 | A1 | 08 June 2016 |
| | | | | US | 2015038156 | A1 | 05 February 2015 |
| | | | | CN | 105432118 | B | 16 October 2018 |
| | | | | EP | 3028503 | B1 | 24 February 2021 |
| | | | | US | 9763252 | B2 | 12 September 2017 |
| | | | | IN | 201507907 | P4 | 31 August 2016 |
| | | | | ID | 201712713 | A | 24 November 2017 |
| CN | 108200615 | A | 22 June 2018 | WO | 2019129209 | A1 | 04 July 2019 |
| US | 2012108276 | A1 | 03 May 2012 | US | 8805428 | B2 | 12 August 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010427896